# EUROPEAN PATENT SPECIFICATION

(11) **EP 2 580 472 B1**
(45) Date of publication and mention of the grant of the patent: **03.09.2014**
(21) Application number: 11726224.6
(22) Date of filing: 09.06.2011
(51) Int. Cl.: F03G 3/08, F16F 15/315

(54) **INERTIAL ENERGY ACCUMULATING FLYWHEEL WITH AIR BEARING**
ENERGIE-SPEICHERENDES SCHWUNGRAD MIT EINEM LUFTLAGER
VOLANT D'INERTIE AVEC UN PALIER A COUSSINET D'AIR

(30) Priority: 09.06.2010 NL 2004857
(43) Date of publication of application: 17.04.2013
(73) Proprietor: S4 Energy B.V., 3016 BM Rotterdam (NL)
(72) Inventor: DE VRIES, Carl, Maria, 3431 GZ Nieuwegein (NL)
(74) Representative: Volmer, Johannes Cornelis
(86) International application number: PCT/NL2011/050417
(87) International publication number: WO 2011/155838

(56) References cited:
- WO-A2-00/67356
- DE-A1- 2 338 265
- DE-A1- 4 025 354
- DE-A1- 4 325 840
- JP-A- 62 103 482
- SU-A1- 672 410

## Description

The present invention relates to an inertial energy accumulating device allowing, for example, absorbing the fluctuations in the production and/or consumption of energy which are associated with a unit for producing energy, such as a wind turbine. A device of this type may also be used to recuperate and then restore or use in some other way a retarding and/or slowing power. The device may also be used to stabilize a rotational speed.

Various types of energy storing systems are known. One type is based on flywheels, that is to say on at least one mass set in rotation by input of energy, which will continue to rotate, under inertia, after the energy input has ceased. The rotating mass is connected to a motor which constitutes a means of inputting energy during the energy-storage periods, or a generator during energy-restoring periods. The heavier the flywheel and the more able it is to rotate quickly with the lowest possible friction, the greater the amount of energy that can be stored. The problem with the flywheel bearings, or more generally with how it is pivot-mounted, is therefore of key importance.

In some types of flywheel the bearings are partially relieved of the weight of the flywheel by applying an electromagnetic force.

Another type is described in PCT application PCT/NL2009/000248 published after the priority date of this application. This inertial energy accumulation device comprises a frame and at least one flywheel mounted so that it can rotate relative to the frame about an axis of rotation, as well as means for exposing at least one face of the flywheel to a gas pressure which, by comparison with the pressure applied to a substantially opposite face of the flywheel, generates an upward differential pressure force that at least partially compensates for the weight of the flywheel, such as by means of gas flow slowing means surrounding the face of the flywheel that is exposed to the gas pressure. It is stated that in this device not only the flywheel bearings are relieved at least partially of the weight of the flywheel, thus increasing their life, but the cost per kWh is also greatly reduced. These flow slowing means make it possible to create a drop in pressure head in the leakage space. They are typically formed between the flywheel and a surface integral with the frame. In an embodiment these flow slowing means comprise a labyrinth seal. In such a seal, the gas flow path comprises a succession of special features that generate drops in pressure head ("head drops"). For example, the cross section for the passage of the gas is alternately reduced and enlarged. The present invention is directed to further improvements of a rotor based inertial energy accumulation device.

It is a general object of the present inventions to improve the rotational stability of the rotor in such a device.

It is a further object of the present invention to improve the control of the levitation of the rotor.

Another object of the present invention is to improve the gas leakage path in the labyrinth seal.

Yet another object of the present invention is to improve the mounting of the rotor.

According to a first aspect the inertial energy accumulation device according to the invention comprises a housing having an inner wall defining a rotor chamber and at least one rotor having an upstanding wall between a bottom end face and a substantially opposite top end face, the rotor being mounted in the rotor chamber so that it can rotate relative to the housing about a vertical axis of rotation leaving free a gap between the inner wall of the housing and the rotor outline, means for exposing at least the bottom end face of the rotor to a gas pressure which, by comparison with the pressure present at the substantially opposite top end face generates an upward differential pressure force that at least partially compensates for the weight of the flywheel, wherein a labyrinth seal is provided in the gap and wherein the rotor has a tapered shape.

The inertial energy accumulation device according to the invention has a housing, which is generally sealed to the environment except for the necessary connections to be described. Thus the inner wall of the housing delimits a rotor chamber. In this rotor chamber a rotor is mounted. The outline of the rotor is defined by a top end face and a bottom end face opposite to the top end face, as well as an upstanding wall between the end faces. The rotor can rotate about a vertical axis of rotation. Usually a rotation shaft extends from both end faces of the rotor into suitable bearings that are provided in the top and bottom of the housing. At least during use a small gap in the order of at most a few mm is present between the inner wall of the housing and the outer perimeter of the rotor. This gap is small compared to the general dimensions of the rotor chamber and rotor. The rotor fills almost all the inner space of the rotor chamber. In this small gap between the upstanding wall of the housing and the opposite periphery of the rotor a labyrinth seal is present. This labyrinth seal comprises - as seen in the direction of flow of the gas from the lower part of the rotor chamber to the upper part thereof- a series of projections and/or grooves, preferably annular projections and/or grooves, that create drops in pressure head. Typically, the cross-section for the passage of gas in the gap is reduced and enlarged in an alternating manner. Advantageously the labyrinth seal extends over the full height of the upstanding wall of the rotor Preferably, the labyrinth is a semi-labyrinth. In the context of this application this expression means that only one of the inner wall of the housing and the outer peripheral wall of the rotor is provided with a series of vertically spaced apart projections, such as rings concentric to the axis of rotation, and that the other one is flat. More preferably, the projections of the labyrinth are provided at the inner wall of the housing . In this embodiment advantageously the projections extend from the inner wall into the gap in a direction perpendicular to the vertical axis of rotation of the rotor. In an embodiment the projections have been formed in a cylindrical housing by removing wall material such that vertically spaced grooves are made, such that adjacent grooves define a projection between them. In fact, then a projection is comprised of non-removed material. In another advantageous embodiment the labyrinth comprises a series of annular sealing plates that are embedded in the housing. Successive plates are separated by annular spacer plates that are arranged recessed from the edges of the sealing plates, thus forming a series of grooves between the sealing plates.

The device according to the invention also comprises a means for applying gas pressure to the lower end face of the rotor. Then the gas supplied flows through the fairly small gap, wherein the labyrinth seal is provided. Due to the pressure drop resulting from the labyrinth seal the gas pressure at the opposite top face is reduced with respect to the gas pressure at the bottom top face and the rotor is lifted thereby compensating for the weight of the rotor and thus reducing the load on the lower bearing.

According to the invention the rotor has a tapered shape, meaning that at least the upstanding wall of the rotor inclines with respect to the vertical axis of rotation of the rotor. Thus the diameter of the rotor increases in the height direction of the rotor. More preferably the rotor is a topped off cone mounted top side down, so that the larger diameter is at the top. The effect of this configuration of the rotor is an accurate regulation of the gas flow through the labyrinth, in fact the device is self-regulating levitation. A (temporary) increase in gas pressure at the bottom of the rotor chamber will lift the rotor higher, but simultaneously the passage for the gas in the labyrinth increases thereby reducing the pressure drop and thus the differential pressure between bottom and top face is reduced as a result the levitation is reduced, the total effect being that there is approximately no change in rotor levitation. Similarly a (temporary) decrease of gas flow will be compensated. This enables the rotor to automatically remain at a constant levitation level during use.

Advantageously the angle between the circumferential wall of the rotor and its vertical axis of rotation is in the range of 0.25 - 10°, more preferably up to 3°, such as 1°.

In a preferred embodiment of the labyrinth seal, in particular a semi-labyrinth seal only having projections provided at the inner wall of the housing, advantageously the tips of the projections are situated on a line parallel to the sloping upstanding wall of the rotor. In other words, the inner diameter of the concentric projections increases from the lower part to the upper part proportional to the increase in diameter of the rotor.

According to a second aspect, which is preferably combined with the first aspect as discussed above, the inertial energy accumulation device according to the invention comprises a housing having an inner wall defining a rotor chamber and at least one rotor having an upstanding wall between a bottom end face and a substantially opposite top end face, the rotor being mounted in the rotor chamber so that it can rotate relative to the housing about a vertical axis of rotation leaving free a gap between the inner wall of the housing and the rotor outline , a means for exposing at least the bottom end face of the rotor to a gas pressure which, by comparison with the pressure present at the substantially opposite top end face generates an upward differential pressure force that at least partially compensates for the weight of the flywheel, wherein the bottom end face of the rotor has a conical recess and wherein preferably a labyrinth seal is provided in the gap. According to this aspect of the invention the bottom of the rotor is not flat, but comprises a conical recess having its top coinciding with the axis of rotation. The conically shaped bottom face ensures a steady flow of gas to the labyrinth seal, as well as a self-centring effect, thereby increasing the stability of the rotor. Advantageously, the angle of the cone is small, e.g. in the range from a few degrees such as 3° to 20°.

The general configuration and preferred embodiments of the device according to the invention have already been described hereinabove with respect to the first aspect of the invention and they are applicable in the same way to the second aspect of the invention.

In a particularly preferred embodiment the recess is delimited by a conical bottom downwardly sloping from an opening for a rotation shaft of the rotor to the lower circumferential rim of the rotor. Thus in this embodiment the recess in the bottom end face extends from the rotor shaft opening all the way to the lower edge of the rotor, where the bottom end face and the upstanding wall meet.

According to a third aspect of the invention, which is preferably combined with the first aspect and/or the second aspect, the inertial energy accumulation device according to the invention comprises a housing having an inner wall defining a rotor chamber and at least one rotor having an upstanding wall between a bottom end face and a substantially opposite top end face, the rotor being mounted in the rotor chamber so that it can rotate relative to the housing about a vertical axis of rotation leaving free a gap between the inner wall of the housing and the rotor outline , a means for exposing at least the bottom end face of the rotor to a gas pressure which, by comparison with the pressure present at the substantially opposite top end face generates an upward differential pressure force that at least partially compensates for the weight of the flywheel, wherein a labyrinth seal comprising projections is provided in the gap and wherein the projections comprised in the labyrinth have an at least partially rounded tip. The at least partially rounded tip of the projections provides for a relatively smooth flow of gas from the pressurized side of a projection to the other side, thereby reducing turbulence, which would adversely affect the stability of the rotor rotation. More preferably the tips of the projections are wing-shaped (like the wings of an aeroplane).

Further advantageous embodiments relating to all three aspects of the invention are described hereinbelow.

In an advantageous embodiment, the labyrinth seal, whether integral with the housing or rotor or made from separate elements, is provided with a coating for reducing gas flow friction. Then the majority of the pressure drop is determined by the dimensions and shape of the labyrinth seal. Preferably, the labyrinth is a semi-labyrinth provided at the inner wall of the housing. In addition to a coating of the semi-labyrinth, the rotor may have an outer smooth shell, e.g. made of steel, plastic and carbon.

In a preferred embodiment, the device according to the invention comprises a compressor having a suction side and a delivery side, the delivery side being connected to the housing for supplying gas to the bottom end face of the rotor and the suction side being connected to the housing for discharging the gas from the top end face of the rotor. The energy consumed by the compressor during a typical storage period represents only a very small percentage of the energy that can be stored in the rotor. This allows, with practically no loss of energy, recirculating the gas from the top end face and feed it again at the desired pressure into the housing at the lower end face of the rotor. Advantageously the lifting force applied by the gas to the rotor is a function of the difference between the suction pressure and the delivery pressure. As pressure difference is the significant factor, this makes it possible, for example, to supply a gas under pressure to the lower end face of the rotor, and/or by suction to create a partial vacuum above the upper end face of the rotor. In both ways a pressure difference between the suction (vacuum) pressure and the supply pressure is established.

In a preferred embodiment of the device according to the invention it comprises a control means for controlling the flow rate of the compressor with a view to maintaining predetermined lift conditions on the rotor, particularly a predetermined pressure difference between the two opposite faces of the rotor and/or a predetermined load on bearings such as rolling bearings or plain bearings. Thus overloading of the bearing and destabilization of the rotor can be prevented effectively.

The device may comprise a heat exchanger between the gas suction side and the gas delivery side for cooling the gas. During use the gas heats up due to compression and/or friction between the gas and the rotor. In order to prevent thermal damage to the device the heat exchanger cools the gas when not in contact with the rotor.

Usually the gas is delivered at a relative (gauge) pressure of between 50 and 60 kPa (about 0.5 and 0.6 bar). Preferably, the pressure near the suction side is substantially zero, for example 10 kPa, so as to limit the friction between the rotor and the surrounding gas.

The gas sucked in and/or delivered is preferably predominantly made up of air, hydrogen or helium, because of their low coefficients of friction and low viscosities. Generally helium is preferred on account of its stability and its low coefficient of friction.

As already described, generally the rotor is secured to a shaft mounted in bearings. A pinion is coupled in terms of rotation to, but axially decoupled from, the rotor. Thus, the rotor shaft allows rotation of the rotor about the common axis of the rotor and of the shaft. The pinion provides connection to equipment external to the rotor. The axial decoupling between the pinion and the rotor prevents any high axial and/or radial stresses there might be from being transmitted to the gear sets. The pinion allows the rotation of the rotor to be coupled to a source of motive power and/or to energy-consuming external equipment. The coupling may be indirect, particularly if several rotors are coupled together.

The rotor shaft is held in position particularly by the self-centring effect about its shaft through a gyroscopic effect and through the effect of the pressure of the gas.

The rotor may be a hollow cone, wherein the mass is concentrated in the outer walls and faces. This is in particular applicable to industrial applications. In a preferred embodiment, e.g. for relatively small domestic applications, the rotor is solid, e.g. made from reinforced concrete or metal.

The rotor may be reinforced by crossed spokes. Typically, there are at least two conical layers of spokes, one widening towards the top and the other towards the bottom. The latter can easily accommodate and support the bottom face having a conical recess according to the second aspect. The two layers cross one another. At the same time, within each layer, the spokes are arranged in pairs forming an X. The crossed spokes arrangement is very simple to implement, affords good precision in the positioning of the upstanding wall of the rotor with respect to its shaft and ensures good balancing of the whole.

According to an advantageous embodiment, several rotors can be joined, e.g. using suitable gear sets and transmission wheels, together to form a matrix, all connected directly or otherwise to the same motor and/or the same consumer. Each rotor is provided with its own pinion and bearing. The rotors are then preferably assembled along the lines of concentric rings, with a central rotor and several peripheral rotors. In another configuration several pinions are connected together by two points of contact each. This configuration entails that at least some of the transmission wheels be superposed. Specifically, pairs of transmission wheels composed of two concentric wheels, one externally toothed and the other internally toothed and surrounding the first are preferably used. Each pair preferably drives three pinions by two points of contact each, one point of contact being with the inner wheel of the pair and the other with the outer wheel of the pair. A configuration of this type gives far greater stability in the transmission of energy between the rotors. The mechanical stresses are lower and there is a better distribution of energy between the pinions..

A particular use of the device according to the invention concerns absorbing fluctuations in the production and/or consumption of energy which are associated with a unit for producing energy, particularly electrical energy, particularly using a wind turbine.

Typically the device according to the invention is connected to a motive source, such as a wind turbine or a motor powered by solar energy, in order to charge the rotor. Discharging typically occurs through a generator in order to convert the rotational speed of the rotor into electricity.

The several aspects of the invention are further illustrated by the attached drawing, wherein:
- Figure 1 is a schematic presentation of an embodiment of the device according to the invention; and
- Figure 2 shows details of the rotor and labyrinth seal according to the invention.

The device according to the invention comprises at least one rotor 10 such as a flywheel rotatable mounted with respect to a cylindrical housing 12 about a vertical axis of rotation 14 in bearings 16. The housing 12 defines a rotor chamber 18. The housing 12 comprises a bottom 20 and an integral upstanding cylindrical wall 22. A cover 24 closes the rotor chamber 18 at the top. The solid rotor 10 has a top end face 26, a bottom end face 28, a connecting upstanding wall 30 between the end faces and is mounted to rotor shaft 32, which is sealed in cover 24 by seal 34. At the other end, the shaft 32 is mounted in a blind bore 36 formed in the bottom 20 of the housing 12.

A compressor 38 establishes a circulation of gas such as pure helium, through the housing 12. Gas supplied from the pressure side of the compressor 38 is fed into lower compartment 40 between the bottom 20 of the housing 12 and the bottom end face 28 of the rotor 10. The gas thus supplied at a relative (gauge) pressure of e.g. between 50 and 60 kPa flows at the periphery of the rotor 10 through gap 42 between the upstanding wall 30 and associated housing wall 22, in which gap a semi-labyrinth seal 44 is provided, to a top compartment 46, from which it is evacuated via heat exchanger 48 to the suction side of the compressor 38. Thus the compartments 40 and 46 are in communication with each other via the semi-labyrinth seal 44.

The gas supplied to the lower compartment 40 generates an upwards force that at least partially compensates for the weight of the rotor 10. In this embodiment, also the reduced pressure by suction of gas from compartment 46 contributes to lifting of the rotor 10.

The labyrinth seal 44 limits the flow rate of gas through the gap 42, creating a pressure drop at each variation in cross section of the gap 42.

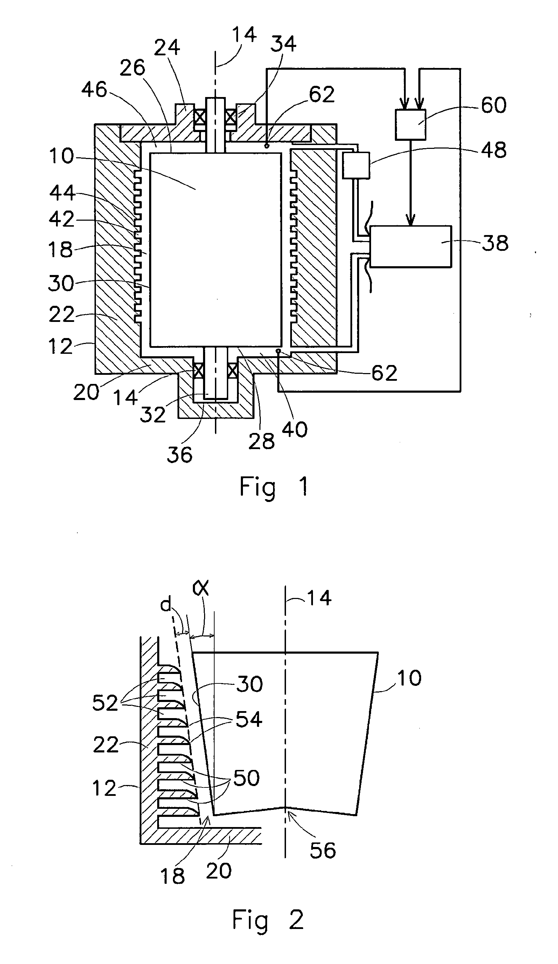

Fig. 2 shows that the rotor 10 has a smooth upstanding wall 30 sloping at an angle a with respect to the vertical axis of rotation. For illustration purposes the angle α has been exaggerated. The inner wall of the housing 12 is provided with substantially horizontally directed projections 50 like ribs spaced apart in vertical direction by grooves 52. The tips 54 of the projections are equally spaced apart (distance d) from the surface 30 of the rotor 10 and are rounded towards the top face of the projections 52. The bottom end face of the rotor 10 slightly tapers towards the shaft, thus forming a recess 56.

This embodiment of a device according to the invention comprises control means 60 using pressure sensors 62 for regulating the flow rate of gas supplied by the compressor 38 with a view to maintaining predetermined lift conditions on the rotor 10, particularly a predetermined pressure difference between two opposite end faces and/or a predetermined vertical load on bearings of the flywheel. The sensors 62 are typically arranged in compartments 40 and 46.:

## Claims

1. Inertial energy accumulation device comprising a housing (12) having an inner wall (20, 22, 24) defining a rotor chamber (18) and at least one rotor (10) having an upstanding wall (30) between a bottom end face (28) and a substantially opposite top end face (26), the rotor (10) being mounted in the rotor chamber (18) so that it can rotate relative to the housing (12) about a vertical axis of rotation (14) leaving free a gap (42) between the inner wall (20, 22, 24) of the housing (12) and the rotor outline, **characterised by** means (38) for exposing at least the bottom end face (28) of the rotor (10) to a gas pressure which, by comparison with the pressure present at the substantially opposite top end face (26) generates an upward differential pressure force that at least partially compensates for the weight of the rotor (10), wherein a labyrinth seal (44) is provided in the gap (42) and wherein the rotor (10) has a tapered shape.

2. Device according to claim 1, wherein the upstanding wall (30) of the rotor inclines relative to the vertical axis of rotation (14).

3. Device according to any one of the preceding claims , wherein the rotor (10) has a frustoconical shape mounted top face down.

4. Device according to any one of the preceding claims, wherein the angle α between the upstanding wall (30) of the rotor and its vertical axis of rotation (14) is in the range of 0.25 - 10°.

5. Device according to any one of the preceding claims, wherein the tips of projections (50) comprised in the labyrinth seal (44) are situated on a line parallel to the inclined upstanding wall (30) of the rotor (10).

6. Device according to any one of the preceding claims, wherein the bottom end face (28) of the rotor has a conical recess (56).

7. Device according to claim 6, wherein the recess (56) is delimited by a bottom downwardly sloping from an opening for a rotation shaft (32) of the rotor (10) to the lower circumferential rim of the rotor (10).

8. Device according to any one of the preceding claims, wherein projections (50) comprised in the labyrinth seal (44) have an at least partially rounded tip (54).

9. Device according to any one of the preceding claims, wherein the projections (50) of the labyrinth seal (44) are provided at the inner wall (22) of the housing (12) opposite the upstanding wall (30) of the rotor.

10. Device according to any one of the preceding claims, further comprising a compressor (38) having a suction side and a delivery side, the delivery side being connected to the housing (12) for supplying gas to the bottom end face (28) of the rotor (10) and the suction side being connected to the housing (12) for discharging the gas at the top end face (26) of the rotor (10).

11. Device according to any one of the preceding claims, wherein the rotor (10) is solid.

12. Device according to any one of the preceding claims, wherein the rotor (10) comprises reinforced concrete.

13. Use of the device according to one of the preceding claims 1 to 12 for absorbing fluctuations in the production and/or the consumption of energy which fluctuations are associated with a unit that produces energy, particularly electrical energy, particularly using a wind turbine.

## Patentansprüche

1. Trägheitsenergiespeichervorrichtung, umfassend ein Gehäuse (12), das eine Innenwand (20, 22, 24) aufweist, die eine Rotorkammer (18) festlegt, und wenigstens einen Rotor (10), der eine hochstehende Wand (30) zwischen einer Bodenendfläche (28) und einer im Wesentlichen entgegengesetzten bzw. gegenüberliegenden Oberendfläche (26) aufweist, wobei der Rotor (10) in der Rotorkammer (18) derart montiert ist, dass er sich relativ zu dem Gehäuse (12) um eine vertikale Drehachse (14) unter Freilassung eines Spaltes (42) zwischen der Innenwand (20, 22, 24) des Gehäuses (12) und dem Rotorumriss drehen kann, **gekennzeichnet durch** Mittel (38) dafür, wenigstens die Bodenendfläche (28) des Rotors (10) einem Gasdruck auszusetzen, der **durch** Vergleich mit dem an der im Wesentlichen entgegengesetzten bzw. gegenüberliegenden Oberendfläche (26) vorhandenen Druck eine Aufwärtsdifferenzdruckkraft erzeugt, die wenigstens teilweise das Gewicht des Rotors (10) ausgleicht, wobei eine Labyrinthdichtung (44) in dem Spalt (42) vorgesehen ist und wobei der Rotor (10) eine verjüngte Form aufweist.

2. Vorrichtung nach Anspruch 1, wobei sich die hochstehende Wand (30) des Rotors relativ zu der vertikalen Drehachse (14) neigt.

3. Vorrichtung nach einem der vorhergehenden Ansprüche, wobei der Rotor (10) eine Kegelstumpfform mit unten montierter oberer Fläche aufweist.

4. Vorrichtung nach einem der vorhergehenden Ansprüche, wobei der Winkel α zwischen der hochstehenden Wand (30) des Rotors und der vertikalen Drehachse (14) hiervon im Bereich von 0,25 bis 10° liegt.

5. Vorrichtung nach einem der vorhergehenden Ansprüche, wobei die Spitzen von Vorsprüngen (50), die in der Labyrinthdichtung (44) umfasst sind, auf einer Linie parallel zu der geneigten hochstehenden Wand (30) des Rotors (10) gelegen sind.

6. Vorrichtung nach einem der vorhergehenden Ansprüche, wobei die Bodenendfläche (28) des Rotors eine konische Ausnehmung (56) aufweist.

7. Vorrichtung nach Anspruch 6, wobei die Ausnehmung (56) durch einen Boden begrenzt ist, der sich von einer Öffnung für eine Drehwelle (32) des Rotors (10) zu dem unteren Umfangsrand des Rotors (10) hin schräg nach unten erstreckt.

8. Vorrichtung nach einem der vorhergehenden Ansprüche, wobei Vorsprünge (50), die in der Labyrinthdichtung (44) umfasst sind, eine wenigstens teilweise gerundete Spitze (54) aufweisen.

9. Vorrichtung nach einem der vorhergehenden Ansprüche, wobei die Vorsprünge (50) der Labyrinthdichtung (44) an der Innenwand (22) des Gehäuses (12) entgegengesetzt bzw. gegenüberliegend zu der hochstehenden Wand (30) des Rotors vorgesehen sind.

10. Vorrichtung nach einem der vorhergehenden Ansprüche, des Weiteren umfassend einen Kompressor (38), der eine Saugseite und eine Zuleitseite aufweist, wobei die Zuleitseite mit dem Gehäuse (12) zum Zuleiten eines Gases zu der Bodenendfläche (28) des Rotors (10) verbunden ist und die Saugseite mit dem Gehäuse (12) zum Abgeben des Gases an der Oberendfläche (26) des Rotors (10) verbunden ist.

11. Vorrichtung nach einem der vorhergehenden Ansprüche, wobei der Rotor (10) fest ist.

12. Vorrichtung nach einem der vorhergehenden Ansprüche, wobei der Rotor (10) verstärkten Beton umfasst.

13. Verwendung der Vorrichtung nach einem der vorhergehenden Ansprüche 1 bis 12 zum Aufnehmen von Schwankungen bei der Herstellung und/oder beim Verbrauch von Energie, wobei die Schwankungen bei einer Einheit, die Energie, insbesondere elektrische Energie, unter Verwendung einer Windturbine erzeugt, auftreten.

## Revendications

1. Dispositif d'accumulation d'énergie inertielle, comprenant un logement (12) ayant une paroi interne (20, 22, 24) définissant une chambre de rotor (18) et au moins un rotor (10) ayant une paroi verticale (30) entre une face d'extrémité inférieure (28) et une face d'extrémité supérieure sensiblement opposée (26), le rotor (10) étant monté dans la chambre de rotor (18) de sorte qu'il puisse tourner par rapport au logement (12) autour d'un axe de rotation vertical (14) en laissant un espace libre (42) entre la paroi interne (20, 22, 24) du logement (12) et le contour du rotor, **caractérisé par** un moyen (38) destiné à exposer au moins la face d'extrémité inférieure (28) du rotor (10) à une pression de gaz qui, en comparaison avec la pression présente au niveau de la face d'extrémité supérieure sensiblement opposée (26), génère une force de pression différentielle vers le haut qui compense au moins partiellement le poids du rotor (10), dans lequel un joint à labyrinthe (44) est agencé dans l'espace (42) et dans lequel le rotor (10) est de forme effilée.

2. Dispositif selon la revendication 1, dans lequel la paroi verticale (30) du rotor s'incline par rapport à l'axe de rotation vertical (14).

3. Dispositif selon l'une quelconque des revendications précédentes, dans lequel le rotor (10) est de forme tronconique et est monté avec la face supérieure vers le bas.

4. Dispositif selon l'une quelconque des revendications précédentes, dans lequel l'angle α entre la paroi verticale (30) du rotor et son axe de rotation vertical (14) est compris dans la plage allant de 0,25 à 10°.

5. Dispositif selon l'une quelconque des revendications précédentes, dans lequel les bouts de protubérances (50) comprises dans le joint à labyrinthe (44) sont situés sur une ligne parallèle à la paroi verticale inclinée (30) du rotor (10).

6. Dispositif selon l'une quelconque des revendications précédentes, dans lequel la face d'extrémité inférieure (28) du rotor comporte un évidement conique (56).

7. Dispositif selon la revendication 6, dans lequel l'évidement (56) est délimité par un fond en pente vers le bas depuis une ouverture pour un arbre de rotation (32) du rotor (10) jusqu'au rebord circonférentiel inférieur du rotor (10).

8. Dispositif selon l'une quelconque des revendications précédentes, dans lequel des protubérances (50) comprises dans le joint à labyrinthe (44) ont un bout (54) au moins partiellement arrondi.

9. Dispositif selon l'une quelconque des revendications précédentes, dans lequel les protubérances (50) du joint à labyrinthe (44) sont agencées au niveau de la paroi interne (22) du logement (12) opposée à la paroi verticale (30) du rotor.

10. Dispositif selon l'une quelconque des revendications précédentes, comprenant en outre un compresseur (38) ayant un côté aspiration et un côté refoulement, le côté refoulement étant raccordé au logement (12) afin d'alimenter en gaz la face d'extrémité inférieure (28) du rotor (10) et le côté aspiration étant raccordé au logement (12) afin d'évacuer le gaz au niveau de la face d'extrémité supérieure (26) du rotor (10).

11. Dispositif selon l'une quelconque des revendications précédentes, dans lequel le rotor (10) est monobloc.

12. Dispositif selon l'une quelconque des revendications précédentes, dans lequel le rotor (10) comprend du béton armé.

13. Utilisation du dispositif selon l'une des revendications 1 à 12 précédentes pour absorber les fluctuations dans la production et/ou la consommation d'énergie, lesquelles fluctuations sont associées à une unité qui produit de l'énergie, en particulier de l'énergie électrique, en particulier en utilisant une éolienne.
